# EUROPEAN PATENT SPECIFICATION

(11) **EP 2 813 447 B1**
(45) Date of publication and mention of the grant of the patent: **17.04.2019**
(21) Application number: 13175749.4
(22) Date of filing: 09.07.2013
(51) Int. Cl.: B65G 49/06, B25J 15/00, B65G 17/12, F16B 2/18, B25B 5/08, B65G 7/12

(54) **Clamping devices**
Klemmvorrichtungen
Dispositifs de serrage

(30) Priority: 13.06.2013 CN 201320337395 U
(43) Date of publication of application: 17.12.2014
(73) Proprietor: Foshan Ideal Co., Ltd., 528515 Guangdong (CN)
(72) Inventor: Wei, Wuxiang, 528515 Foshan Guangdong (CN)
(74) Representative: Groth & Co. KB

(56) References cited:
- EP-A1- 0 033 072
- EP-A2- 1 419 989
- WO-A1-2012/113073
- AU-A4- 2013 100 477
- DE-A1- 2 108 868
- DE-U1-202005 002 868
- DE-U1-202013 103 058
- FR-A5- 2 121 181
- GB-A- 2 459 482
- US-A- 3 789 468

## Description

### Field of the Invention

The present invention relates to a clamping device, especially to a clamping device suitable for use with fragile products such as glass.

### Background of the Invention

The mounting and movement of fragile products, such as glass, are normally carried out by means of special tools. For instance, when a glass shower door is mounted, a level and a glass clamper are always needed to fix and move the glass door. However, the coupling of conventional glass clampers with glass requires additional fasteners such as screws or bolts. This causes the mounting operation to be time-consuming and it requires additional tools to complete the mounting operation. In addition, conventional glass clamper can only be operated between completely released position and completely locked position, which is inconvenient for the mounting operation. EP 0 033 072 A1 discloses a clamping device comprising a clamping base, a cam mechanism, and a flexible cushion. The clamping base has an opening for receiving at least a part of an object to be clamped and a cavity for receiving the cam mechanism. The cam mechanism which is rotatable with respect to the clamping base between a first position, in which the clamping device completely locks the object to be clamped, and a second position, in which the clamping device completely releases from the object, comprises a rod, a cam portion and a linkage portion connecting the rod with the cam portion. The cam portion in form of a cylinder has a first protruded surface and a second protruded surface on at least a part of an outer surface of the cylinder, wherein the first protruded surface has a height with respect to the outer surface smaller than that of the second protruded surface. The flexible cushion is located within the opening and when in use between the clamping base and the object to be clamped. However, it is not clear from the disclosure of EP 0 033 072 A1 that the clamping device could provide sufficient buffering for the object to be clamped without any additional tool.

### Summary of the Invention

An object of the invention is to provide a clamping device which does not need any additional tool to achieve clamping and to provide buffering for the object to be clamped.

Another object of the invention is to provide a clamping device which can be operated among complete released position, pre-locked position and completely locked position, facilitating mounting operation.

To achieve the one or more objects of the present invention, a clamping device is provided comprising a clamping base and a cam mechanism. The clamping base has an opening for receiving at least a part of an object to be clamped, and a cavity for receiving the cam mechanism. The clamping base has a top wall and two sidewalls which jointly define the opening. The clamping base has a first recess on the top wall and a second recess on one sidewall, whereby the first recess and the second recess jointly define the cavity for receiving the cam mechanism, and the first recess does not communicate with the opening while the second recess does. The cam mechanism is rotatable with respect to the clamping base between a first position, in which the clamping device completely locks the object to be clamped, and a second position, in which the clamping device completely releases from the object. The clamping device further comprises a flexible cushion located within the opening and when in use between the clamping base and the object to be clamped, and a rigid cushion located in one sidewall of the flexible cushion and when in use abutted against the cam mechanism.

The flexible cushion is provided to enhance clamping of the object by increase of friction force between the object and the cushion. In one preferable embodiment, the flexible cushion preferably is provided with teeth on one or both sidewalls toward to the object.

In one preferable embodiment, the rigid cushion has a lateral wing to increase contact area so as to prevent the rigid cushion from displacement.

According to one embodiment, the clamping base further comprises a linkage used for linking the clamping device and the object to other elements. The linkage is preferably laterally extended from the clamping base.

According to one embodiment, the cam mechanism comprises a rod, a cam portion and a linkage portion connecting the rod with the cam portion. The cam portion is in form of a cylinder and has a protruded surface on at least a part of an outer surface of the cylinder.

In a preferable embodiment, the cam mechanism comprises a rod, a cam portion and a linkage portion connecting the rod with the cam portion. The cam portion is in form of a cylinder and has a first protruded surface and a second protruded surface on at least a part of an outer surface of the cylinder. The first protruded surface has a height with respect to the outer surface smaller than that of the second protruded surface. The protruded surfaces having different heights enable to achieve pre-locking and complete locking of the object. In pre-locking position, the object is not able to freely move but still movable when an external force is applied thereon. In complete locking position, the object is completely not movable.

Preferably, the first and second protruded surfaces are noncontinuous. The first protruded surface preferably has a rectangular section and the second protruded surface preferably has an arched section.

According to one embodiment, the object to be clamped is glass, wood or other suitable materials, preferably glass.

The clamping device provided by the present invention can achieve clamping/locking of an object without use of additional tools. In preferable case, the clamping device can operated among three different positions, i.e., completely released position, pre-locked position, and completely locked position, facilitating the control and handling of the object.

### Brief Description of Drawings

Fig. 1 shows a clamping device according to one example of the invention.
Fig. 2 shows an exemplary cam mechanism of the clamping device according to one embodiment of the invention.
Fig. 3 shows another exemplary cam mechanism of the clamping device according to one embodiment of the invention.
Fig. 4 shows an exemplary clamping base of the clamping device according to one embodiment of the invention.
Fig. 5 shows a clamping device according to another embodiment of the invention, in which the cam mechanism is omitted for clarity.
Figs. 6 to 8 show different operation positions of an exemplary clamping device coupled with glass, in which Fig. 6 shows completely released position, Fig. 7 shows completely locked position, and Fig. 8 shows pre-locked position.

Elements that are irrelevant to the spirit of the invention are omitted from the drawings for the sake of clarity.

### Detailed Description of the Invention

The present invention will now be described in more detail in reference to the drawings. It should be noted that the terminology used herein is for the purpose of describing particular embodiments only and is not intended to be limiting of example embodiments of the invention. As used herein, the singular forms "a," "an," and "the," are intended to include the plural forms as well, unless the context clearly indicates otherwise. As used herein, the terms "and/or" include any and all combinations of one or more of the associated listed items. It will be further understood that the terms "comprises" "comprising" "includes" and/or "including" when used herein, specify the presence of stated features, integers, steps, operations, elements, and/or components, but do not preclude the presence or addition of one or more other features, integers, steps, operations, elements, components, and/or groups thereof.

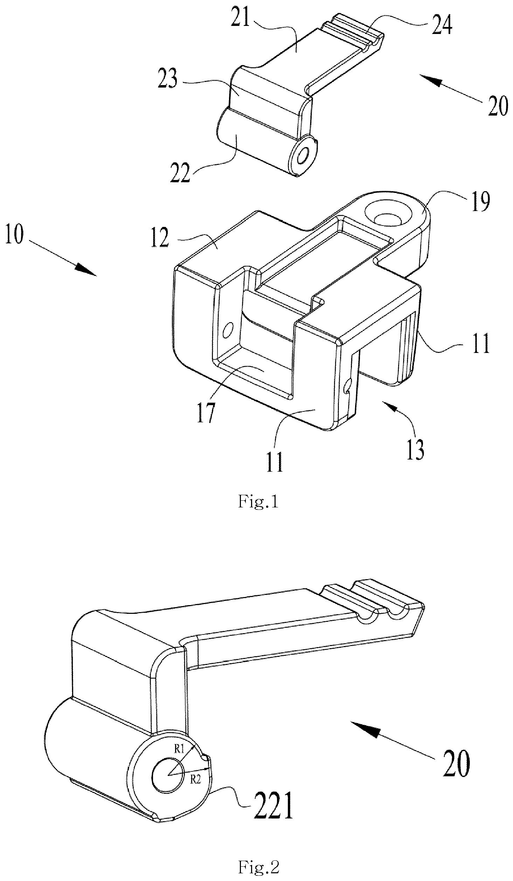

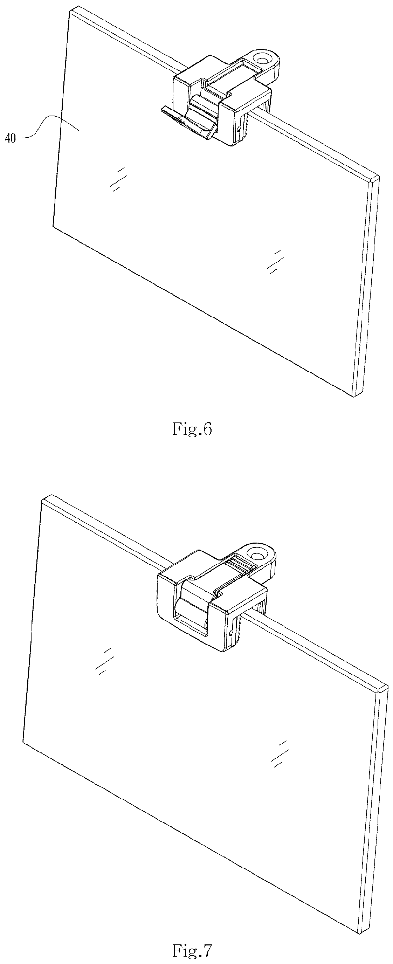

With reference to Fig. 1, a exemplary clamping device according to the present invention is shown. The clamping device comprises a clamping base 10 and a cam mechanism 20, wherein the clamping base 10 includes two sidewalls 11 and a top wall 12 jointly define an opening 13 in form of a letter "n" for receiving at least a part of the object 40 (see Fig. 6) to be clamped. The clamping base 10 also includes a linkage 19 for connecting the clamping device together with the object 40 to other elements. In the example, the linkage 19 is extended laterally from the clamping base 10.

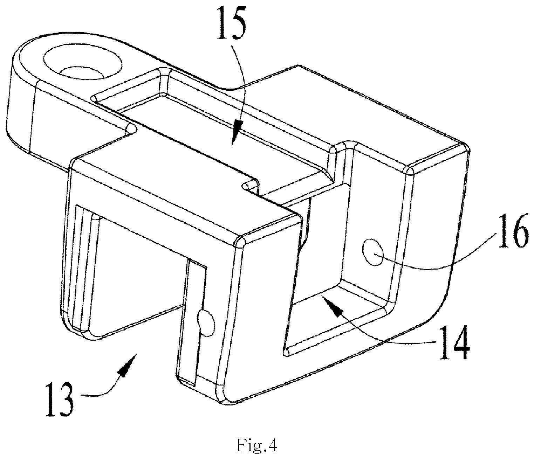

As shown in Fig. 4, the clamping base 10 has a first recess 15 on the top wall 12 and a second recess 14 on the sidewall 11. The first recess 15 and the second recess 14 jointly define a cavity for receiving the cam mechanism 20. The first recess 15 does not communicate with the opening 13 while the second recess 14 does.

The cam mechanism 20 is received in the cavity in suitable manner and rotatable with respect to the clamping base 10 at least in a first position and a second position. For example, the cam mechanism 20 and the clamping base 10 are provided with pin holes 16 through which a pin (not shown) passes to dispose the cam mechanism in the cavity.

The cam mechanism 20 comprises a rod 21, a cam portion 22 and a linkage portion 23 connecting the rod 21 with the cam portion 22. Preferably, a handle portion 24 is formed at an end of the rod 21 for facilitating handling of the cam mechanism. In the example, a plurality of notch is formed at the handle portion 24 to increase friction force. The cam mechanism 20 is received within the cavity formed by the recesses 14, 15.

With reference to Fig. 2, an exemplary cam mechanism 20 is shown. The cam mechanism 20 is cylindrical and on a part of the outer surface of the cylinder a protruded surface 221 is formed. As shown in the figure, from the sectional view of the cylinder, R1 represents the distance between the axis of the cylinder and the outer surface, R2 represents the distance between the axis of the cylinder and the protruded surface 221, wherein R2>R1. Therefore, when the clamping base 10 is contact with the outer surface of cylinder with radius R1, the clamping device does not interfere with the object to be clamped and the object is able to move freely. When the clamping base 10 is contact with the protruded surface 221, however, the clamping device applies a force onto the object and enable it to be clamped within the opening and not movable.

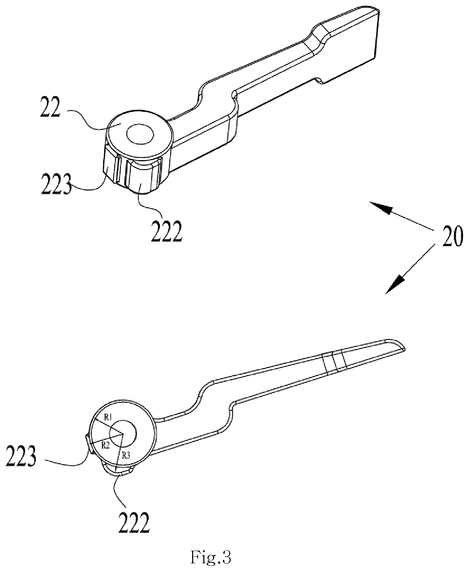

Fig. 3 shows another form of cam mechanism 20. The cam portion 22 of the cam mechanism 20 is cylindrical and on a part of the outer surface of the cylinder a first protruded surface 223 and a second protruded surface 222 are formed. As shown in the bottom drawing of Fig. 3, from the sectional view of the cylinder, R1 represents the distance between the axis of the cylinder and the outer surface, R2 represents the distance between the axis of the cylinder and the first protruded surface 223, and R3 represents the distance between the axis of the cylinder and the second protruded surface 222, wherein R3>R2>R1. The differences among R1, R2, and R3 enable to achieve different locking/clamping conditions of the clamping device, i.e., completely released position, pre-locked position and completely locked position.

Specifically, when the clamping base 10 is contact with the outer surface of the cylinder with radius R1, clamping device does not interfere with the object to be clamped and the latter can move freely. When the clamping base 10 is contact with the first protruded surface 223, the clamping device applies a force onto the object to cause the object not to move freely. However, in this position, the object can still be moved when an external force, always generated by a person who carries out the mounting operation, is applied thereon. When the clamping base 10 is contact with the second protruded surface 222, the clamping device will apply a greater force to the object to enable it to be clamped within the opening and not movable. Therefore, the cam mechanism 20 in this example provides a intermediate position between the completely released position and completely locked position, i.e., the pre-locked position, which facilitates the movement and adjustment of the object to be clamped.

In the example, the first and second protruded surfaces are noncontinuous, which is favorable for full achievement of the pre-locking effect. The space between the protruded surfaces can be determined by a skilled person in the art. In the example, the first protruded surface 223 has a rectangular section while the second protruded surface 222 has a arched section. The person skilled in the art can also contemplate sections with other suitable shapes.

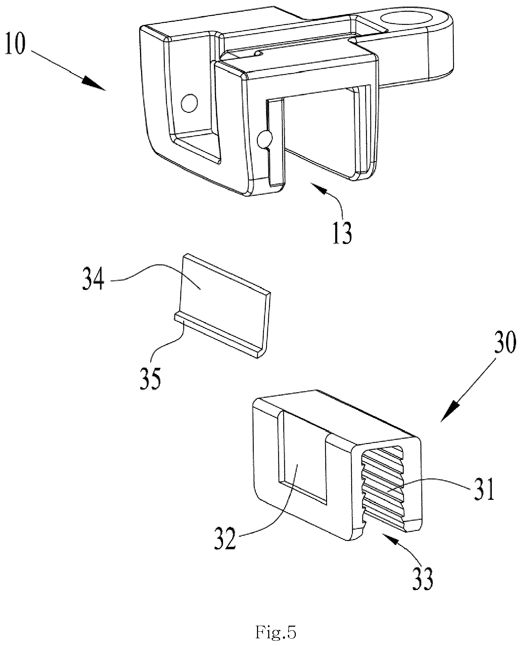

With reference to Fig. 5, another exemplary clamping device is shown. For the sake of clarity, the cam mechanism of the clamping device is omitted, which can be any one of the cam mechanism shown in Fig. 2 or Fig. 3. In the example, the clamping device comprises a flexible cushion in similar shape with the opening so as to be disposed within the opening 13 when in use. The flexible cushion 30 is normally formed by plastic materials such as rubbers, EVA, PE and so on. The flexible cushion 30 is provided with teeth 31 on one or both sidewalls thereof to increase the friction force with the object to be clamped. The object is then disposed within the opening 33 of the flexible cushion 30. In the example, the flexible cushion 30 may have a concave 32 on the sidewall toward the cam mechanism, for receiving an optional rigid cushion 34, which will be described in more detail herebelow.

Fig. 5 shows the rigid cushion 34 which is optionally included in the clamping device of the invention. When the rigid cushion 34 exists, it is received within the concave 32 of the flexible cushion 30. In the example, the rigid cushion 34 further comprises a lateral wing 35, for increasing the contact area with the clamping base 10 in a purpose of preventing the rigid cushion 34 from sliding displacement. The rigid cushion 34 is generally in form of metal or non-stainless steel sheet. The provision of rigid cushion 34 is to receive most of the force generated by the protruded surface of the cam mechanism so as to provide buffering for the object to be clamped, such as glass. In the present example, the lateral wing 35 is in contact with the bottom 17 (Fig. 1) of the second recess 14.

Figs. 6 and 7 show different operation position of the clamping device according to one embodiment of the invention in coupled with the object to be clamped (such as glass 40). Fig. 6 shows completely released position in which no force is applied on the object by the clamping device and the glass 40 is free to move in horizontal and vertical directions. Fig.7 shows the completely locked position in which the protruded surface (221 or 222) of the cam mechanism 20 applies a force to the optional rigid cushion 34, and in turn to the optional flexible cushion 30 and finally to object disposed within the opening 33, such that the object is clamped.

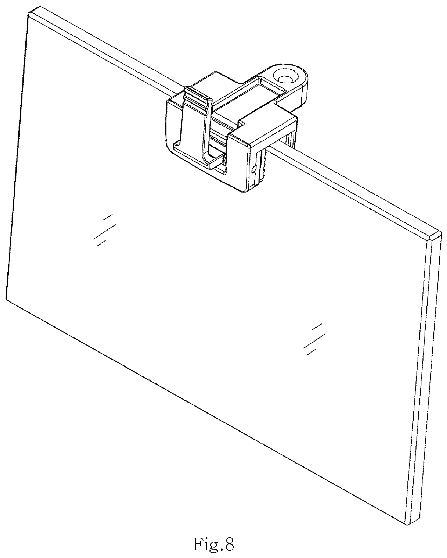

Fig. 8 shows the pre-locked position of the clamping device, in which the first protruded surface 223 is contact with the rigid cushion 34 and applies force onto the flexible cushion 30 and in turn the glass 40. However, because the first protruded surface 223 has less extent of protrusion, the force applied onto the glass 40 is such that it can only hold the object. When an external force is applied, usually by a person carries out the mounting operation, the glass 40 is still movable. Therefore, it is convenient for the person to move and adjust the glass 40. When the cam mechanism is rotated to enable the second protruded surface 222 to contact with the rigid cushion 34, the glass 40 will be applied with greater force so as to tightly clamp the glass 40 and make it not movable even under external force.

It should be understood that various example embodiments have been described with reference to the accompanying drawings in which only some example embodiments are shown. The present invention, however, may be embodied in many alternate forms and should not be construed as limited to only the example embodiments set forth herein.

## Claims

1. A clamping device, comprising a clamping base (10) and a cam mechanism (20), wherein
the clamping base (10) has an opening (13) for receiving at least a part of an object (40) to be clamped and a cavity for receiving the cam mechanism (20);
the clamping base (10) has a top wall (12) and two sidewalls (11) which jointly define the opening (13);
the clamping base (10) has a first recess (15) on the top wall (12) and a second recess (14) on one sidewall (11), whereby the first recess (15) and the second recess (14) jointly define the cavity for receiving the cam mechanism (20), and the first recess (15) does not communicate with the opening (13) while the second recess (14) does; and wherein
the cam mechanism (20) is rotatable with respect to the clamping base (10) between a first position, in which the clamping device completely locks the object (40) to be clamped, and a second position, in which the clamping device completely releases from the object (40);
**characterized in that**
the clamping device further comprises a flexible cushion (30) located within the opening and when in use between the clamping base (10) and the object (40) to be clamped, and a rigid cushion (34) located in one sidewall of the flexible cushion (30) and when in use abutted against the cam mechanism (20).

2. The clamping device of claim 1, wherein the flexible cushion (30) is provided with teeth (31) on one or both sidewalls toward to the object (40).

3. The clamping device of claim 1, wherein the rigid cushion (34) has a lateral wing (35) to increase contact area so as to prevent the rigid cushion (34) from displacement.

4. The clamping device of claim 1, wherein the clamping base (10) further comprises a linkage (19) laterally extended from the clamping base (10).

5. The clamping device of claim 1, wherein the cam mechanism (20) comprises a rod (21), a cam portion and a linkage portion (23) connecting the rod (21) with the cam portion, the cam portion being in form of a cylinder and having a protruded surface on at least a part of an outer surface of the cylinder.

6. The clamping device of claim 1, wherein the cam mechanism (20) comprises a rod (21), a cam portion (22) and a linkage portion (23) connecting the rod (21) with the cam portion (22), the cam portion (22) being a cylinder and having a first protruded surface (223) and a second protruded surface (222) on at least a part of an outer surface of the cylinder, the first protruded surface (223) having a height with respect to the outer surface smaller than that of the second protruded surface (222).

7. The clamping device of claim 6, wherein the first protruded surface (223) has a rectangular section and the second protruded surface (222) has an arched section.

8. The clamping device of claim 1, wherein the object (40) to be clamped is glass.

## Patentansprüche

1. Klemmvorrichtung, umfassend eine Klemmenbasis (10) und eine Exzentermechanismus (20), wobei
die Klemmenbasis (10) eine Öffnung (13) zum Aufnehmen zumindest eines Teils eines zu klemmenden Objekts (40) und einen Hohlraum zum Aufnehmen des Exzentermechanismus (20) aufweist;
die Klemmenbasis (10) eine obere Wand (12) und zwei Seitenwände (11) aufweist, die zusammen die Öffnung (13) definieren;
die Klemmenbasis (10) eine erste Vertiefung (15) an der oberen Wand (12) und eine zweite Vertiefung (14) an einer Seitenwand (11) aufweist, wobei die erste Vertiefung (15) und die zweite Vertiefung (14) zusammen den Hohlraum zum Aufnehmen des Exzentermechanismus (20) definieren, und die erste Vertiefung (15) nicht mit der Öffnung (13) in Verbindung steht, die zweite Vertiefung (14) jedoch schon; und wobei
der Exzentermechanismus (20) in Bezug auf die Klemmenbasis (10) zwischen einer ersten Position, in der die Klemmvorrichtung das zu klemmende Objekt (40) vollständig festklemmt, und einer zweiten Position, in der die Klemmvorrichtung vollständig von dem Objekt (40) gelöst ist, drehbar ist;
**dadurch gekennzeichnet, dass**
die Klemmvorrichtung ferner einen flexiblen Puffer (30), der in der Öffnung und bei Verwendung zwischen der Klemmenbasis (10) und dem zu klemmenden Objekt (40) angeordnet ist, und einen starren Puffer (34) umfasst, der in einer Seitenwand des flexiblen Puffers (30) und bei Verwendung an den Exzentermechanismus (20) angrenzend angeordnet ist.

2. Klemmenvorrichtung nach Anspruch 1, wobei der flexible Puffer (30) an einer oder beiden Seitenwänden zu dem Objekt (40) hin mit Zähnen (31) versehen ist.

3. Klemmvorrichtung nach Anspruch 1, wobei der starre Puffer (34) einen seitlichen Schenkel (35) aufweist, um die Kontaktfläche zu erhöhen, um ein Verrutschen des starren Puffers (34) zu vermeiden.

4. Klemmvorrichtung nach Anspruch 1, wobei die Klemmenbasis (10) ferner ein Verbindungselement (19) umfasst, das sich seitlich von der Klemmenbasis (10) erstreckt.

5. Klemmvorrichtung nach Anspruch 1, wobei der Exzentermechanismus (20) eine Stange (21), einen Exzenterteil und einen Verbindungsteil (23) umfasst, der die Stange (21) mit dem Exzenterteil verbindet, wobei der Exzenterteil die Form eines Zylinders hat und an zumindest einem Teil einer Außenfläche des Zylinders eine vorstehende Fläche aufweist.

6. Klemmvorrichtung nach Anspruch 1, wobei der Exzentermechanismus (20) eine Stange (21), einen Exzenterteil (22) und einen Verbindungsteil (23) aufweist, der die Stange (21) mit dem Exzenterteil (22) verbindet, wobei der Exzenterteil (22) ein Zylinder ist und eine erste vorstehende Fläche (223) und eine zweite vorstehende Fläche (222) an zumindest einem Teil einer Außenfläche des Zylinders aufweist, wobei die erste vorstehende Fläche (223) eine Höhe in Bezug auf die Außenfläche aufweist, die kleiner als die der zweiten vorstehenden Fläche (222) ist.

7. Klemmvorrichtung nach Anspruch 6, wobei die erste vorstehende Fläche (223) ein rechteckiges Profil aufweist und die zweite vorstehende Fläche (222) ein gebogenes Profil aufweist.

8. Klemmvorrichtung nach Anspruch 1, wobei das zu klemmende Objekt (40) Glas ist.

## Revendications

1. Dispositif de serrage, comprenant une base de serrage (10) et un mécanisme de came (20), dans lequel
la base de serrage (10) comporte une ouverture (13) destinée à recevoir au moins une partie d'un objet (40) à serrer et une cavité destinée à recevoir le mécanisme de came (20);
la base de serrage (10) présente une paroi supérieure (12) et deux parois latérales (11) qui définissent conjointement l'ouverture (13);
la base de serrage (10) comporte un premier évidement (15) sur la paroi supérieure (12) et un second évidement (14) sur une première paroi latérale (11), dans lequel le premier évidement (15) et le second évidement (14) définissent conjointement la cavité destinée à recevoir le mécanisme de came (20), et le premier évidement (15) ne communique pas avec l'ouverture (13) alors que c'est le cas du second évidement (14); et dans lequel
le mécanisme de came (20) est rotatif par rapport à la base de serrage (10) entre une première position, dans laquelle le dispositif de serrage verrouille complètement l'objet (40) à serrer, et une seconde position, dans laquelle le dispositif de serrage se libère complètement de l'objet (40),
**caractérisé en ce que** le dispositif de serrage comprend en outre un coussin souple (30) qui est situé à l'intérieur de l'ouverture et, lors de l'utilisation, entre la base de serrage (10) et l'objet (40) à serrer, et un coussin rigide (34) qui est situé dans une première paroi latérale du coussin souple (30) et qui, lors de l'utilisation, bute contre le mécanisme de came (20) .

2. Dispositif de serrage selon la revendication 1, dans lequel le coussin souple (30) est pourvu de dents (31) sur une ou chacune des deux parois latérales en direction de l'objet (40).

3. Dispositif de serrage selon la revendication 1, dans lequel le coussin rigide (34) présente un aile latérale (35) pour augmenter la surface de contact dans le but d'empêcher le coussin rigide (34) de se déplacer.

4. Dispositif de serrage selon la revendication 1, dans lequel la base de serrage (10) comprend en outre une liaison (19) qui s'étend latéralement à partir de la base de serrage (10).

5. Dispositif de serrage selon la revendication 1, dans lequel le mécanisme de came (20) comprend une tige (21), une partie de came et une partie de liaison (23) qui relie la tige (21) à la partie de came, la partie de came étant en forme de cylindre et présentant une surface saillante sur au moins une partie d'une surface extérieure du cylindre.

6. Dispositif de serrage selon la revendication 1, dans lequel le mécanisme de came (20) comprend une tige (21), une partie de came (22) et une partie de liaison (23) qui relie la tige (21) à la partie de came (22), la partie de came (22) étant un cylindre et présentant une première surface saillante (223) et une seconde surface saillante (222) sur au moins une partie d'une surface extérieure du cylindre, la première surface saillante (223) présentant une hauteur par rapport à la surface extérieure qui est inférieure à celle de la seconde surface saillante (222).

7. Dispositif de serrage selon la revendication 6, dans lequel le première surface saillante (223) présente une section rectangulaire et la seconde surface saillante (222) présente une section arquée.

8. Dispositif de serrage selon la revendication 1, dans lequel l'objet (40) à serrer est du verre.
